# EUROPÄISCHE PATENTSCHRIFT

(11) **EP 0 794 981 B1**
(45) Veröffentlichungstag und Bekanntmachung des Hinweises auf die Patenterteilung: **13.05.1998**
(21) Anmeldenummer: 95940236.3
(22) Anmeldetag: 23.11.1995
(51) Int. Cl.: C09D 5/44, C09D 17/00

(54) **LAGERSTABILES, EINKOMPONENTIGES KONZENTRAT, SEINE HERSTELLUNG UND VERWENDUNG ZUR HERSTELLUNG KATHODISCH ABSCHEIDBARER ELEKTROTAUCHLACKBÄDER**
SINGLE-COMPONENT CONCENTRATE WHICH IS STABLE DURING STORAGE, ITS PRODUCTION AND USE IN PREPARING CATHODIC-PRECIPITATION ELECTRO-DIPCOAT BATHS
CONCENTRE STABLE AU STOCKAGE A UN SEUL COMPOSANT, SA PREPARATION ET SON UTILISATION POUR PRODUIRE DES BAINS DE TREMPAGE ELECTROPHORETIQUE A PRECIPITATION PAR VOIE CATHODIQUE

(30) Priorität: 30.11.1994 DE 4442509
(43) Veröffentlichungstag der Anmeldung: 17.09.1997
(73) Patentinhaber: Herberts Gesellschaft mit beschränkter Haftung, 42285 Wuppertal (DE)
(72) Erfinder: KLEIN, Klausjörg, D-42289 Wuppertal (DE)
(74) Vertreter: Türk, Gille, Hrabal, Leifert
(86) Internationale Anmeldenummer: EP9504613
(87) Internationale Veröffentlichungsnummer: WO9617023

(56) Entgegenhaltungen:
- EP-A- 0 183 025
- EP-A- 0 262 496
- EP-A- 0 408 186
- EP-A- 0 558 986

## Beschreibung

Die Erfindung betrifft zur Herstellung deckend pigmentierter kathodisch abscheidbarer Elektrotauchlackbäder (KTL) geeignete lagerstabile und lösemittelarme einkomponentige Konzentrate.

Sie betrifft auch die Herstellung der Konzentrate und deren Verwendung in Verfahren zur Herstellung oder Ergänzung von KTL-Bädern.

In der industriellen Anwendung befindliche kathodisch abscheidbare Elektrotauchlackbäder werden mit Badfestkörpergehalten von im allgemeinen zwischen 10 und 25 Gew.-% betrieben. Ihr Lösemittelgehalt soll möglichst gering sein.

Die Neuerstellung bzw. die Festkörperkompensation von KTL-Bädern beim Anwender mittels einkomponentiger Konzentrate ist bekannt. Diese Konzentrate werden hergestellt durch Anreiben der Pigmente und Füllstoffe in der organischen Lösung eines KTL-Bindemittels, Neutralisation mit Säure und im allgemeinen Verdünnen mit Wasser. Die Konzentrate sind wasserarm oder wasserfrei und im Regelfall vollneutralisiert. Sie werden beim Anwender im Regelfall mit einem Festkörpergehalt von über 50 Gew.-% und einem Lösemittelgehalt zwischen 20 und 40 Gew.-% angeliefert. Die Konzentrate sind lagerstabil, d.h. sie müssen nicht ständig durchmischt werden, beispielsweise durch Rühren. Die Konzentrate besitzen hohe Viskositäten von beispielsweise über 2000 mPa.s bei 20°C. Beim Anwender müssen sie bei der Neuerstellung eines KTL-Bades mit Wasser oder im Falle der Festkörperkompensation mit an Festkörper verarmtem KTL-Badinhalt vermischt werden. Dies erfordert aufgrund der hohen Viskositätsunterschiede eine spezielle technische Ausstattung und Verfahrensweise und ist mit einem hohen Arbeitsaufwand verbunden. So werden diese einkomponentigen Konzentrate mit Dickstoffpumpen aus den angelieferten Behältnissen gefördert und in kontinuierlich oder diskontinuierlich arbeitenden Vormischeinrichtungen auf einen Festkörpergehalt von im allgemeinen unter 30 Gew.-% vorverdünnt. Diese Vormischungen sind unbewegt, beispielsweise ohne Rühren nicht oder nur kurzzeitig lagerstabil; sie können ohne besonderen Aufwand direkt zum fertigen KTL-Bad weiter verdünnt werden. Die so hergestellten fertigen KTL-Bäder besitzen unerwünscht hohe Lösemittelgehalte von beispielsweise über 4 Gew.-% bei einem Badfestkörper von 20 Gew.-%. Dies entspricht einem Gehalt an organischem Lösemittel von 20 bis 50 Gew.-%, bezogen auf den Festkörpergehalt der KTL-Bäder.

Alternativ sind zweikomponentige KTL-Materialien entwickelt worden, aus denen beim Anwender KTL-Bäder durch Verdünnen mit Wasser neuerstellt werden oder womit eine Festkörperkompensation durch Vermischen mit an Festkörper verarmtem KTL-Badinhalt durchgeführt werden kann (vgl. EP-A-0 183 025, EP-A-0 203 024 und H. Kittel, Lehrbuch der Lacke und Beschichtungen, Band 7, Verlag W.A. Colomb, Berlin, 1979, Seite 166). Bei den zweikomponentigen KTL-Materialien handelt es sich um a) eine Bindemittelkomponente in Form einer lösemittelfreien oder lösemittelarmen, wäßrigen Dispersion des KTL-Bindemittels und gegebenenfalls vorhandenen Vernetzers (KTL-Dispersion) und b) eine separate Pigmentpaste, welche im allgemeinen hergestellt wird durch Anreiben der Pigmente und Füllstoffe in einem speziellen Pastenharz. Beide Komponenten sind auch ohne Rühren lagerstabil und lassen sich aufgrund der ihnen eigenen niedrigen Viskosität von im allgemeinen unter 500 mPa.s gemessen rotationsviskosimetrisch bei 20°C und einem Schergefälle von 150 s⁻¹ ohne besonderen apparativen Aufwand beim Anwender handhaben. Beide Komponenten sind mit dem KTL-Badinhalt verträglich, während sich ein direktes Vermischen der beiden Komponenten miteinander im allgemeinen wegen der oftmals schon nach kurzzeitiger Lagerung auftretenden Unverträglichkeiten und/oder Stabilitätsproblemen verbietet. Daher erfolgt das Verdünnen mit Wasser oder an Festkörper verarmtem KTL-Badinhalt separat, beispielsweise durch separate aber parallele Zudosierung zum an Festkörper verarmten KTL-Bad. Um das Abscheideverhalten und die Lackfilmparameter konstant zu halten, müssen die beiden Komponenten beim Anwender in einem festen Verhältnis zueinander dem KTL-Bad zudosiert werden, was Fehlermöglichkeiten birgt. Der logistische Aufwand ist im Vergleich zum Arbeiten mit einem einkomponentigen Material erhöht, beispielsweise ist die Lagerhaltung aufwendiger und der Prüfaufwand beim Anwender ist vervielfacht. Die auf Basis der zweikomponentigen KTL-Materialien hergestellten KTL-Bäder besitzen einen niedrigen Gehalt an organischen Lösemitteln von beispielsweise unter 4 Gew.-% bei einem Badfestkörper von 20 Gew.-%, entsprechend einem auf Badfestkörper bezogenen Lösemittelgehalt von 0 bis 20 Gew.-%.

Es bestand die Aufgabe, ein einkomponentiges Konzentrat bereitzustellen, das zur Herstellung und zur Festkörperkompensation deckend pigmentierter kathodisch abscheidbarer Elektrotauchlackbäder (KTL) ohne oder mit niedrigem Lösemittelgehalt geeignet, im unbewegten Zustand lagerfähig und für den Anwender in einfacher Weise handhabbar ist. Es soll keine aufwendige Logistik bedingen.

Diese Aufgabe wird gelöst durch Bereitstellung eines deckend pigmentierten wäßrigen KTL-Konzentrats, enthaltend ein oder mehrere kathodisch abscheidbare Bindemittel, gegebenenfalls einen oder mehrere Vernetzer für die Bindemittel, gegebenenfalls ein oder mehrere organische Lösemittel, ein oder mehrere Pigmente und gegebenenfalls Füllstoffe, sowie Wasser, das dadurch gekennzeichnet ist, daß sein Festkörpergehalt 35 bis 50 Gew.-%, bei einem Gewichtsverhältnis von Pigment und gegebenenfalls Füllstoff zu Bindemittel plus gegebenenfalls vorhandenem Vernetzer 0,01 : 1 bis 0,4 : 1, seine Viskosität 100 bis 500 mPa.s, gemessen rotationsviskosimetrisch bei 20°C und einem Schergefälle von 150 s⁻¹, und sein Lösemittelgehalt 0 bis unter 20 Gew.-%, bevorzugt unter 5 Gew.-%, bezogen auf den Festkörpergehalt, beträgt.

Das KTL-Konzentrat kann im Prinzip hergestellt werden durch Einfärbung einer ein oder mehrere kationische Bindemittel und gegebenenfalls einen oder mehrere Vernetzer enthaltenden KTL-Dispersion mit Pigmenten und gegebenenfalls Füllstoffen als solche und/oder mit einer oder mehreren Pigmente und gegebenenfalls Füllstoffe enthaltenden Zubereitungen; dabei ist es möglich, die Einfärbung während der Herstellung der KTL-Dispersion, wie beispielsweise der Herstellung der Bindemittel, durchzuführen.

Im Rahmen der Erfindung hat sich jedoch gezeigt, daß es besonders günstig und bevorzugt ist, eine ein oder mehrere kathodisch abscheidbare Bindemittel, gegebenenfalls ein oder mehrere Vernetzer für die Bindemittel und gegebenenfalls ein oder mehrere organische Lösemittel enthaltende wäßrige Dispersion, die eine Viskosität von 500 bis 2000 mPa.s, gemessen rotationsviskosimetrisch bei 20°C und einem Schergefälle von 150 s⁻¹, aufweist, zu vermischen mit einer Zubereitung, die ein oder mehrere Pigmente und gegebenenfalls Füllstoffe, sowie ein oder mehrere mit Wasser mischbare organische Lösemittel und/oder Wasser enthält und eine Viskosität von 50 bis 10000 mPa.s, bevorzugt unter 2000 mPa.s, gemessen rotationsviskosimetrisch bei 20°C und einem Schergefälle von 150 s⁻¹, aufweist. Überraschenderweise hat es sich gezeigt, daß beim Vermischen derartiger Komponenten ein Konzentrat entsteht, das eine geringere Viskosität aufweist, als die zu seiner Herstellung eingesetzten Ausgangsdispersionen bzw. Zubereitungen.

Das erfindungsgemäße KTL-Konzentrat besteht aus nur einer Komponente, ist überraschenderweise auch ohne Rühren lagerfähig und eignet sich sowohl zur Neuerstellung als auch zur Festkörperkompensation im Betrieb befindlicher, durch Elektroabscheidung an Festkörper verarmter KTL-Bäder.

Kationische Bindemittel und gegebenenfalls Vernetzer enthaltende KTL-Dispersionen, die zur Herstellung von KTL-Bädern eingesetzt werden können, sind bekannt. Bei den kationischen Bindemitteln handelt es sich um Bindemittel, die kationische oder in kationische Gruppen überführbare basische Gruppen, z.B. Amino-, Ammonium-, z.B. quartäre Ammonium-, Phosphonium- und/oder Sulfonium-Gruppen tragen. Bevorzugt sind Bindemittel mit basischen Gruppen. Besonders bevorzugt sind stickstoffhaltige basische Gruppen, wie Aminogruppen. Diese Gruppen können quarternisiert vorliegen oder sie werden mit einem üblichen Neutralisationsmittel, z.B. einer organischen Monocarbonsäure, wie z.B. Milchsäure, Ameisensäure, Essigsäure, wie dem Fachmann geläufig, in kationische Gruppen überführt. Solche basischen Harze sind beispielsweise primäre, sekundäre und/oder tertiäre Aminogruppen enthaltende Harze. Die Aminzahlen solcher Harze liegen z.B. bei 20 bis 250 mg KOH/g. Das Gewichtsmittel der Molmasse (Mw) der Harze liegt bevorzugt bei 300 bis 10000. Beispiele für solche Harze sind Amino(meth)acrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Harze können selbstvernetzend sein oder sie werden mit bekannten Vernetzern im Gemisch eingesetzt. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige und/oder umamidierungsfähige Gruppen enthalten.

Beispiele für in kathodischen Tauchlack (KTL)-Überzugsmitteln eingesetzte Harze und Vernetzer, die erfindungsgemäß bei der Herstellung der KTL-Dispersionen bzw. der KTL-Konzentrate verwendet werden können, sind in der EP-A-0 082 291, EP-A-0 178 531, EP-A-0 209 857, EP-A-0 227 975, EP-A-0 245 786, EP-A-0 261 385, EP-A-0 310 971, EP-A-0 333 327, EP-A-0 456 270, EP-A-0 476 514, US-A-3 922 253, DE-A-33 24 211, beschrieben. Diese Harze können allein oder im Gemisch eingesetzt werden. Im Rahmen der Erfindung hat sich der Einsatz von Bindemittelsystemen gemäß EP-A-0 234 395 und EP-A-0 414 199 besonders bewährt.

KTL-Dispersionen werden hergestellt durch Synthese von kationische Gruppen oder in kationische Gruppen überführbare Gruppen enthaltenden Bindemitteln in Anwesenheit oder Abwesenheit organischer Lösemittel und Überführung in eine wäßrige Dispersion durch Verdünnen der zuvor mit Säure neutralisierten Bindemittel mit Wasser. Das oder die Bindemittel können im Gemisch mit einem oder mehreren geeigneten Vernetzern vorliegen und gemeinsam mit diesen in die wäßrige Dispersion überführt werden. Organisches Lösemittel kann, sofern vorhanden, vor oder nach Überführung in die wäßrige Dispersion bis zum gewünschten Gehalt entfernt werden, beispielsweise durch Destillation im Vakuum. Die nachträgliche Entfernung von Lösemitteln kann beispielsweise vermieden werden, wenn die gegebenenfalls im Gemisch mit Vernetzern vorliegenden kationischen Bindemittel im lösemittelarmen oder -freien Zustand, z.B. als lösemittelfreie Schmelze bei Temperaturen von beispielsweise bis zu 140°C mit Säure neutralisiert und anschließend mit Wasser in die KTL-Dispersion überführt werden. Ebenfalls ist es möglich und im Rahmen der vorliegenden Erfindung bevorzugt, die Entfernung organischer Lösemittel zu vermeiden, wenn die Bindemittel als Lösung in einem radikalisch polymerisierbaren, olefinisch ungesättigten Monomeren vorgelegt werden oder die Bindemittelsynthese in einem radikalisch polymerisierbaren Monomeren (z.B. Styrol) als Lösemittel durchgeführt wird, danach durch Neutralisation mit Säure und Verdünnen mit Wasser in eine wäßrige Dispersion überführt wird und anschließend das radikalisch polymerisierbare Monomere auspolymerisiert wird, wie in EP-A-0 622 389 beschrieben.

Bevorzugt besitzen die einzufärbenden KTL-Dispersionen einen Gehalt an organischen Lösemitteln von unter 5 Gew.-%, bezogen auf den Festkörper der Dispersion.

Die einzufärbenden KTL-Dispersionen besitzen Festkörpergehalte von im allgemeinen zwischen 35 und 50 Gew.-%.

Erfindungswesentlich ist es, daß die zur Herstellung der Konzentrate eingesetzte KTL-Dispersion eine rotationsviskosimetrisch bei 20°C und einem Schergefälle von 150 s⁻¹ gemessene Viskosität von 500 bis 2000 mPa.s besitzt. Die Viskosität dieser einzufärbenden KTL-Dispersionen kann in dem Fachmann geläufiger Weise durch verschiedene Parameter beeinflußt werden, im wesentlichen beispielsweise durch entsprechende Wahl des Festkörpergehaltes, des Neutralisationsgrades, des Lösemittelgehaltes und/oder der Art der Lösemittel.

Die erfindungsgemäß bereitgestellten KTL-Konzentrate sind deckend pigmentiert und enthalten Pigmente und gegebenenfalls Füllstoffe, jedoch keine wasserlöslichen oder in organischen Medien löslichen Farbstoffe.

Beispiele für Pigmente und Füllstoffe sind die üblichen anorganischen und/oder organischen Pigmente wie Ruß, Graphit, Kohle verschiedensten Ursprungs, Titandioxid, Eisenoxid, Kaolin, Talkum oder Siliciumdioxid, Azopigmente, Phthalocyaninpigmente, aber auch Korrosionsschutzpigmente wie z.B. Zinkphosphat. Im Rahmen der Erfindung bevorzugte Pigmente sind Ruße und Titandioxid.

Die erfindungsgemäß bereitgestellten KTL-Konzentrate sind mit Pigmenten und gegebenenfalls Füllstoffen deckend pigmentiert. Unter deckender Pigmentierung ist zu verstehen, daß aus den unter Verwendung erfindungsgemäßer KTL-Konzentrate hergestellten oder betriebenen KTL-Bädern abgeschiedene Lackfilme bei einer Trockenschichtdicke von 15 µm oder weniger Deckfähigkeit besitzen.

Die Pigmentierung der KTL-Konzentrate erfolgt durch Einfärbung von KTL-Dispersionen. Als Mittel zur Einfärbung der KTL-Dispersionen dienen Pigmente als solche, d.h. in Pulverform, oder bevorzugt Pigmente und gegebenenfalls Füllstoffe enthaltende Zubereitungen. Beispiele für Zubereitungen sind Pigmentpasten, wie sie für KTL-Systeme üblich sind und durch Dispergieren von Pigmenten und gegebenenfalls Füllstoffen auf gewünschte Kornfeinheit in KTL-Bindemitteln oder KTL-Pastenharzen hergestellt werden können. Für die Dispergierung geeignete Harze sind dem Fachmann geläufig. Beispiele für KTL-Pastenharze sind in der EP-A-0 183 025 und in der EP-A-0 469 497 beschrieben. Es hat sich gezeigt, daß es nicht notwendig ist, die Zubereitungen in Anwesenheit von Bindemitteln oder Pastenharzen herzustellen. Falls Bindemittel oder Pastenharze eingesetzt werden, so erfolgt dies bevorzugt in geringen Mengen, z.B. so daß sich ein Pigment/Harz (Bindemittel und/oder Pastenharz) von über 7:1 ergibt. Besonders bevorzugte Beispiele für erfindungsgemäß verwendbare Pigmente und gegebenenfalls Füllstoffe enthaltende Zubereitungen sind Pigmentsuspensionen (Pigmentslurrys) oder Pigmentanreibungen in Wasser und/oder organischen, wassermischbaren Lösemitteln, wie Glykole, z.B. Ethylenglykol, Propylenglykol; Alkohole, z.B. sec.-Butanol und Hexanol; Glykolether, z.B. Ethoxypropanol, Methoxypropanol und Butoxyethanol. Derartige Pigmentanreibungen sind auch im Handel erhältlich und werden z.B. von der Firma HOECHST unter der Bezeichnung Colanyl^{R} vertrieben. Die der Einfärbung dienenden Zubereitungen können ein oder mehrere Pigmente und gegebenenfalls Füllstoffe enthalten. Im Rahmen der Erfindung werden Füllstoffe bei der Einfärbung bevorzugt vermieden.

Es ist außerdem erfindungswesentlich, daß die Pigmente und gegebenenfalls Füllstoffe enthaltenden Zubereitungen bei 20°C und einem Schergefälle von 150 s⁻¹ gemessene Viskositäten von 50 bis 10000 mPa.s, bevorzugt unter 2000 mPa.s, aufweisen.

Die KTL-Dispersionen können während ihrer Herstellung mit Pigmenten als solchen in Pulverform und/oder mit Pigmente und gegebenenfalls Füllstoffe enthaltenden Zubereitungen deckend eingefärbt werden. Die Einfärbung während des Herstellungsprozesses der KTL-Dispersion kann beispielsweise erfolgen durch Vorlegen der Einfärbemittel vor der Zugabe des als Schmelze oder als organische Lösung gegebenenfalls im Gemisch mit einem Vernetzer vorliegenden kationischen Bindemittels oder durch Zugabe der Einfärbemittel vor oder während der Synthese des kationischen Bindemittels an beliebiger Stelle und anschließende Überführung in das deckend pigmentierte KTL-Konzentrat durch Neutralisation mit Säure und Verdünnen mit Wasser.

Bevorzugt erfolgt die Einfärbung erst an der fertigen KTL-Dispersion. Dazu können Pigmente als solche in Pulverform verwendet werden und/oder es werden bevorzugt die vorstehend erläuterten Pigmente und gegebenenfalls Füllstoffe enthaltenden Zubereitungen eingesetzt. Die pulverförmigen Pigmente werden eingestreut, während die bevorzugt eingesetzten Pigmente und gegebenenfalls Füllstoffe enthaltenden Zubereitungen als flüssige Materialien zudosiert werden. Besonders bevorzugt erfolgt die deckende Einfärbung direkt im Anschluß an die Fertigstellung der KTL-Dispersion, d.h. die Einfärbung der KTL-Dispersion wird bevorzugt beim Hersteller des erfindungsgemäßen KTL-Konzentrats durchgeführt. Insbesondere bevorzugt ist es, die Einfärbung im gleichen Behältnis durchzuführen, in dem zuvor die KTL-Dispersion hergestellt wurde und zwar direkt im Anschluß an deren Fertigstellung. Die Einfärbung der KTL-Dispersion erfolgt bevorzugt bei erhöhter Temperatur, beispielsweise zwischen 35 und 60°C.

Zusätzlich zu den Basisharzen, den gegebenenfalls vorhandenen Vernetzern, den Pigmenten und gegebenenfalls vorhandenen Füllstoffen können die erfindungsgemäßen KTL-Konzentrate lackübliche Additive enthalten. Als Additive sind beispielsweise die üblichen Additive für KTL-Überzugsmittel möglich. Beispiele dafür sind Netzmittel, Neutralisationsmittel, Verlaufsmittel, Katalysatoren, Antischaummittel, Lösemittel sowie übliche Antikrateradditive. Die Additive können während der Bindemittelsynthese, während der Herstellung der KTL-Dispersion oder während der Einfärbung, beispielsweise über die Pigmente enthaltende Zubereitung, in das KTL-Konzentrat eingebracht werden.

Bevorzugt enthalten die erfindungsgemäßen KTL-Konzentrate Katalysatoren für die Vernetzung, wie beispielsweise die für diesen Zweck üblichen Metallverbindungen. Beispiele sind Blei-, Zinn-, Titan-, Eisen- und Lanthanverbindungen. Bevorzugt sind die in den erfindungsgemäßen KTL-Konzentraten enthaltenen katalytisch wirkenden Metallverbindungen zumindest zum Teil wasserlöslich. Beispiele für geeignete wasserlösliche Metallverbindungen sind Bleiacetat und Eisenacetylacetonat. Insbesondere bevorzugt ist es jedoch, daß die erfindungsgemäßen KTL-Konzentrate frei von gesundheitlich bedenklichen Schwermetallverbindungen sind, beispielsweise bleifrei.

Besonders bevorzugte erfindungsgemäße KTL-Konzentrate sind solche, die als Katalysator einen Zusatz von Wismut als Wismutate und/oder in Form organischer Wismutkomplexe und/oder als Wismutsalze organischer Carbonsäuren enthalten. Diese sind in der nicht vorveröffentlichten deutschen Patentanmeldung DE-A-43 30 002 der gleichen Anmelderin beschrieben. Bei den Salzen kann es sich um solche einer organischen Mono- oder Polycarbonsäure handeln. Als Beispiel für komplexbildende Liganden sei z.B. Acetylaceton genannt. Es sind jedoch auch andere organische Komplexbildner mit einer oder mehreren komplexbildenden Gruppen möglich. Beispiele für geeignete organische Carbonsäuren, von denen sich im Rahmen der Erfindung einsetzbare Wismutsalze ableiten, sind aromatische, araliphatische und aliphatische Mono- oder Dicarbonsäuren. Bevorzugt sind die Wismutsalze von organischen Monocarbonsäuren, insbesondere mit mehr als zwei C-Atomen, speziell Hydroxycarbonsäuren. Beispiele sind Wismutsalicylat, Wismut-4-hydroxybenzoat, Wismutlactat, Wismutdimethylolpropionat. Insbesondere sind die Wismutsalze von aliphatischen Hydroxycarbonsäuren geeignet.

Der Mengenanteil der Wismutverbindung im KTL-Konzentrat kann beispielsweise 0,1 bis 5 Gew.-%, bevorzugt 0,5 bis 3,0 Gew.-% betragen, berechnet als Wismut und bezogen auf den Bindemittelfestkörper des KTL-Konzentrats. Die Wismutverbindung kann im erfindungsgemäßen KTL-Konzentrat in der wäßrigen oder in der dispersen Phase gelöst, feinverteilt, z.B. in kolloidaler Form, oder als vermahlenes Pulver vorliegen. Bevorzugt besitzt sie eine zumindest anteilige Wasserlöslichkeit, besonders bevorzugt ist sie wasserlöslich.

Die Einarbeitung der vorstehend beschriebenen Wismutverbindungen in das KTL-Konzentrat kann auf verschiedene Weise erfolgen. Beispielsweise kann die Wismutverbindung der neutralisierten Bindemittellösung gegebenenfalls bei erhöhter Temperatur zugegeben und anschließend unter Rühren homogenisiert werden, bevor durch Zugabe wesentlicher Mengen von Wasser als Verdünnungsmittel die Überführung in die KTL-Dispersion erfolgt. Bei Verwendung von Hydroxycarbonsäuren, wie z.B. Milchsäure oder Dimethylolpropionsäure, als Neutralisationsmittel für die Bindemittel, kann auch mit den entsprechenden Mengen an Wismutoxid oder -hydroxid gearbeitet werden, wobei das entsprechende Wismutsalz in situ gebildet wird.

Weiterhin ist die Einarbeitung der Wismutverbindung in das KTL-Konzentrat z.B. auch als Bestandteil der Einfärbemittel, z.B. der vorstehend erwähnten Pigmentpasten möglich. Ebenso können die Wismutverbindungen, wenn sie wasserlöslich sind bzw. in einem Lösungsvermittler gelöst vorliegen, der fertigen KTL-Bindemitteldispersion vor deren Einfärbung oder dem an sich fertigen KTL-Konzentrat zugesetzt werden.

Von erfindungswesentlicher Bedeutung ist es, daß die KTL-Dispersion, die der Einfärbung dienenden Mittel und die gegebenenfalls zugesetzten lacküblichen Additive nach Art und Menge so ausgewählt werden, daß das resultierende KTL-Konzentrat einen Festkörpergehalt zwischen 35 und 50 Gew.-% und ein Gewichtsverhältnis von Pigment plus gegebenenfalls Füllstoff zu Bindemittel- und gegebenenfalls vorhandenem Vernetzer-Festkörper zwischen 0,01 zu 1 und 0,4 zu 1, bevorzugt unter 0,2 zu 1 aufweist. Weiterhin wird so gearbeitet, daß das fertige KTL-Konzentrat eine rotationsviskosimetrisch bei 20°C und einem Schergefälle von 150 s⁻¹ gemessene Viskosität zwischen 100 und 500 mPa.s besitzt und sein Lösemittelgehalt 20 Gew.-%, bevorzugt 15 Gew.-%, bezogen auf den Festkörper, unterschreitet.

Gegebenenfalls kann das KTL-Konzentrat nach Vermischen aller notwendigen Komponenten durch Verdünnen mit Wasser auf den vorstehend genannten Festkörpergehalt und die genannten Viskositätswerte eingestellt werden.

Beim Anwender können ohne den Gebrauch besonderer Aggregate aus den erfindungsgemäß bereitgestellten KTL-Konzentraten durch Verdünnen mit entsprechenden Mengen an Wasser KTL-Bäder erstellt werden oder während des Betriebes durch Lackabscheidung an Festkörper verarmte KTL-Bäder werden mit einer entsprechenden Menge des erfindungsgemäßen KTL-Konzentrats vermischt, um eine Festkörperkompensation durchzuführen. Dabei ist es naturgemäß bevorzugt, daß sowohl Badinhalt als auch erfindungsgemäßes KTL-Konzentrat hinsichtlich der qualitativen als auch der quantitativen Zusammensetzung ihres Festkörpergehaltes weitgehend identisch sind.

Aus den KTL-Bädern, die unter Verwendung der erfindungsgemäßen KTL-Konzentrate erstellt bzw. betrieben werden, können in üblicher Weise elektrisch leitfähige Substrate durch kathodische Elektroabscheidung beschichtet werden.

Die erfindungsgemäßen KTL-Konzentrate können vom Hersteller zum Anwender geliefert werden, ohne während des Transports gerührt werden zu müssen, ebenso sind sie beim Anwender ohne Rühren über einen längeren Zeitraum, beispielsweise bis zu mehr als 3 Monate, lagerfähig und können dort ohne besonderen Aufwand gehandhabt werden. Da es sich bei den erfindungsgemäßen KTL-Konzentraten um einkomponentige Materialien handelt, ist ein geringerer logistischer und Prüfaufwand gegeben als bei den in der heutigen Praxis weit verbreiteten zweikomponentigen KTL-Materialien. Die unter Verwendung der erfindungsgemäßen KTL-Konzentrate hergestellten und betriebenen KTL-Bäder besitzen niedrige Lösemittelgehalte von beispielsweise unter 4 Gew.-%, bevorzugt unter 3 Gew.-%, bei einem Festkörpergehalt von 20 Gew.-%, entsprechend einem Lösemittelgehalt von unter 20 Gew.-%, bezogen auf den Badfestkörper.

### Beispiel 1 (Herstellung eines Aminoepoxidharzes)

Zu einer Lösung von 283,2 g Polyglycidylether auf Basis Bisphenol A (Epoxid-Äquivalentgewicht = 472) in 202 g Ethoxyethanol werden 21 g Diethanolamin, 10,2 g 3-Dimethylamino-1-propylamin und 61,6 g eines Addukts von 116 g 1,6-Diaminohexan mit 500 g Cardura E 10^{R}, dem Glycidylester einer alpha-verzweigten C₉- bis C₁₁-Monocarbonsäure, zugegeben. Die Mischung von Polyether und den Aminen reagiert 4 Stunden lang unter Rühren bei einer Temperatur von 85 bis 90°C. Zum Vervollständigen der Reaktion wird dann noch 1 Stunde auf 120°C geheizt. Der Epoxidgehalt ist dann Null.
Aminzahl: 98 mg KOH/g Festharz;
Festkörpergehalt: 65 Gew.-%.

### Beispiel 2 (Herstellung eines Aminoepoxidharzes)

Eine Mischung aus 89,2 eines Reaktionsproduktes von 1 Mol Polypropylenoxiddiglycid (Epoxid-Äquivalentgewicht = 317) mit 2 Molen Versaticsäure, 1112 g eines Epoxidharzes auf Basis Bisphenol A (Epoxid-Äquivalentgewicht = 469) und 113,4 g eines Reaktionsproduktes aus Polypropylenoxiddiglycid und Bisphenol A (Epoxid-Äquivalentgewicht = 469) wird vorsichtig homogen aufgeschmolzen. Nach Abkühlen auf 68°C werden 62,3 g N-Methylethanolamin in 25 Minuten zugetropft, wobei die Temperatur bis auf 76°C ansteigt. Nach weiteren 20 Minuten wird eine Mischung aus 42,3 g 3-Dimethylamino-1-propylamin und einem Reaktionsprodukt aus 46,7 g 1,6-Diaminohexan mit 209 g Cardura E 10^{R}, dem Glycidylester einer alpha-verzweigten C₉- bis C₁₁-Monocarbonsäure, zugegeben, auf 125°C aufgeheizt und eine Stunde bei 125°C gehalten. Anschließend wird mit Ethoxyethanol auf einen Festkörpergehalt von 65 Gew.-% eingestellt.

### Vergleichsversuch A (Herstellung eines KTL-Bades aus einem einkomponentigen KTL-Konzentrat nach dem Stand der Technik)

108,6 Teile der Lösung des Aminoepoxidharzes aus Beispiel 1, 7,0 Teile der Lösung des Aminoepoxidharzes aus Beispiel 2, 0,6 Teile einer 50 %igen Lösung von Surfinol 104^{R} (Tetramethyldecindiol) in Butoxyethanol und 2,0 Teile 85 %ige Ameisensäure werden homogen miteinander vermischt. Anschließend werden 0,4 Teile Ruß, 19,6 Teile Titandioxid, 4,8 Teile Texanol^{R} und 10,0 Teile einer 25 %igen wäßrigen Lösung von Wismutdimethylolpropionat-bishydroxid, Bi(OH)₂C₅H₉O₄, unter dem Dissolver zugegeben und 30 min. vordispergiert und anschließend auf einer Perlmühle ausdispergiert. Danach werden 39,0 Teile einer 64 %igen Lösung eines Adduktes aus 1 Mol Trimethylolpropan, 3 Mol Toluylendiisocyanat und 3 Mol Butoxyethanol in einer 1 : 6-Mischung aus Butoxyethanol und Ethoxyethanol zugegeben und homogen vermischt. Man erhält ein einkomponentiges, lagerstabiles KTL-Konzentrat mit einem Festkörper von 64 Gew.-% und einer Viskosität von 12900 mPa.s, rotationsviskosimetrisch gemessen bei 20°C und einem Schergefälle von 8 s⁻¹. Anschließend wird wegen des ausgeprägten Wasserbergs vorsichtig und portionsweise mit deionisiertem Wasser unter dem Dissolver zum fertigen KTL-Bad verdünnt. Das fertige KTL-Bad besitzt einen Festkörpergehalt von 20 Gew.-% und einen Lösemittelgehalt von 9,7 Gew.-%.

### Vergleichsversuch B (Herstellung eines KTL-Bades aus einer KTL-Dispersion und einer Pigmentpaste)

a) 108,6 Teile der Lösung des Aminoepoxidharzes aus Beispiel 1, 39,0 Teile einer 64 %igen Lösung eines Adduktes aus 1 Mol Trimethylolpropan, 3 Mol Toluylendiisocyanat und 3 Mol Butoxyethanol in einer 1 : 6-Mischung aus Butoxyethanol und Ethoxyethanol und 4,8 Teile Texanol^{R} (2,2,4-Trimethyl-1,3-pentandiol-monoisobutyrat) werden miteinander homogen vermischt. Nach Abdestillation von 49,6 Teilen Ethoxyethanol im Vakuum und Zugabe von 1,5 Teilen 85 %iger Ameisensäure, 159,7 Teilen deionisierten Wassers und 10,0 Teilen einer 25 %igen wäßrigen Lösung von Wismutdimethylolpropionat-bishydroxid, Bi(OH)₂C₅H₉O₄, erhält man eine lagerstabile KTL-Dispersion mit einem Festkörper von 36 Gew.-% und einer Viskosität von 62 mPa.s, rotationsviskosimetrisch gemessen bei 20°C und einem Schergefälle von 150 s⁻¹.
b) 7,0 Teile der Lösung des Aminoepoxidharzes aus Beispiel 2, 0,6 Teile einer 50 %igen Lösung von Surfinol 104^{R} in Butoxyethanol, 0,5 Teile 85 %ige Ameisensäure und 19,9 Teile deionisierten Wassers werden homogen miteinander vermischt. Danach werden 0,4 Teile Ruß und 19,6 Teile Titandioxid unter dem Dissolver zugegeben, 30 min. vordispergiert und anschließend auf einer Perlmühle ausdispergiert. Man erhält eine lagerstabile Pigmentpaste mit einem Festkörper von 52 Gew.-% und einer Viskosität von 284 mPa.s, rotationsvikosimetrisch gemessen bei 20°C und einem Schergefälle von 150 s⁻¹.
c) Unter einem Flügelrührer werden 45,7 Teile der unter a) erhaltenen KTL-Dispersion und 46,3 Teile deionisierten Wassers vermischt. Nach Zugabe von 8 Teilen der unter b) erhaltenen Pigmentpaste erhält man ein fertiges KTL-Bad mit einem Festkörpergehalt von 20 Gew.-% und einem Lösemittelgehalt von 1,6 Gew.-%.

Eine aus 45,7 Teilen der unter a) erhaltenen KTL-Dispersion und 8 Teilen der unter b) erhaltenen Pigmentpaste hergestellte Mischung ist ohne ständiges Rühren nicht lagerstabil (unter anderem Ausflockungen und Sedimentation).

### Beispiel 3 (Herstellung eines KTL-Bades aus einem erfindungsgemäßen einkomponentigen KTL-Konzentrat, erfindungsgemäßes Beispiel)

a) 108,6 Teile der Lösung des Aminoepoxidharzes aus Beispiel 1, 4,0 Teile der Lösung des Aminoepoxidharzes aus Beispiel 2, 39,0 Teile einer 64 %igen Lösung eines Adduktes aus 1 Mol Trimethylolpropan, 3 Mol Toluylendiisocyanat und 3 Mol Butoxyethanol in einer 1 : 6-Mischung aus Butoxyethanol und Ethoxyethanol und 4,8 Teile Texanol^{R} werden miteinander homogen vermischt. Nach Abdestillation von 49,6 Teilen Ethoxyethanol im Vakuum und Zugabe von 1,6 Teilen 85 %iger Ameisensäure, 146,4 Teilen deionisierten Wassers und 10,0 Teilen einer 25 %igen wäßrigen Lösung von Wismutdimethylolpropionatbishydroxid, Bi(OH)₂C₅H₉O₄, erhält man eine KTL-Dispersion mit einem Festkörper von 38 Gew.-% und einer Viskosität von 584 mPa.s, rotationsviskosimetrisch gemessen bei 20°C und einem Schergefälle von 150 s⁻¹.
b) 3,0 Teile der Lösung des Aminoepoxidharzes aus Beispiel 2, 0,6 Teile einer 50 %igen Lösung von Surfinol 104^{R} in Butoxyethanol, 0,4 Teile 85 %ige Ameisensäure und 12,4 Teile deionisierten Wassers werden homogen miteinander vermischt. Danach werden 19,6 Teile Titandioxid unter dem Dissolver zugegeben und es wird 30 min. unter dem Dissolver dispergiert. Man erhält eine Pigmentsuspension mit einer Viskosität von 234 mPa.s, rotationsviskosimetrisch gemessen bei 20°C und einem Schergefälle von 150 s⁻¹. Sie wird der KTL-Dispersion aus a) unter Rühren zugegeben. Anschließend werden 1,2 Teile einer wäßrigen Rußanreibung (Rußgehalt = 33 Gew.-%, Wassergehalt = 42 Gew.-%, Lösemittelgehalt = 25 Gew.-% Propylenglykol), mit einer rotationsviskosimetrisch bei 20°C und einem Schergefälle von 150 s⁻¹ gemessenen Viskosität von 511 mPa.s, homogen eingerührt. Man erhält ein auch nach dreimonatiger Aufbewahrung ohne Rühren lagerstabiles KTL-Konzentrat mit einem Festkörper von 41 Gew.-% und einer Viskosität von 187 mPa.s, rotationsviskosimetrisch gemessen bei 20°C und einem Schergefälle von 150 s⁻¹. Durch Verdünnung mit deionisiertem Wasser wird in ein fertiges KTL-Bad mit einem Festkörpergehalt von 20 Gew.-% und einem Lösemittelgehalt von 1,7 Gew.-% übergeführt.

Die gemäß Vergleichsversuch A und B und Beispiel 3 hergestellten KTL-Bäder besitzen jeweils eine gleiche Festkörperzusammensetzung. Aus ihnen auf metallischen Substraten abgeschiedene und eingebrannte Lackfilme besitzen identische technologische Eigenschaften.

## Patentansprüche

1. Zur Herstellung und Ergänzung von kathodisch abscheidbaren Elektrotauchlackbädern geeignetes Konzentrat, enthaltend ein oder mehrere kathodisch abscheidbare Bindemittel, gegebenenfalls einen oder mehrere Vernetzer für die Bindemittel, gegebenenfalls ein oder mehrere organische Lösemittel,
ein oder mehrere Pigmente und/oder eine oder mehrere Pigmente enthaltende Zubereitungen und gegebenenfalls Füllstoffe sowie Wasser,
dadurch gekennzeichnet, daß sein Festkörpergehalt 35 bis 50 Gew.-%, bei einem Gewichtsverhältnis von Pigment und gegebenenfalls Füllstoff zu Bindemittel plus gegebenenfalls vorhandenem Vernetzer 0,01 : 1 bis 0,4 : 1,
seine Viskosität 100 bis 500 mPa.s, gemessen rotationsviskosimetrisch bei 20°C und einem Schergefälle von 150 s⁻¹,
und sein Lösemittelgehalt 0 bis unter 20 Gew.-%, bezogen auf den Festkörpergehalt, beträgt.

2. Konzentrat nach Anspruch 1, dadurch gekennzeichnet, daß es erhältlich ist durch Vermischen einer wäßrigen Dispersion aus einem oder mehreren kathodisch abscheidbaren Bindemitteln, gegebenenfalls einem oder mehreren Vernetzern für die Bindemittel, gegebenenfalls einem oder mehreren organischen Lösemitteln, mit einer Viskosität von 500 bis 2000 mPa.s, gemessen rotationsviskosimetrisch bei 20°C und einem Schergefälle von 150 s⁻¹,
mit einer Zubereitung, die ein oder mehrere Pigmente und gegebenenfalls Füllstoffe, sowie gegebenenfalls ein oder mehrere mit Wasser mischbare organische Lösemittel und Wasser enthält und eine Viskosität von 50 bis 10000 mPa.s, gemessen rotationsviskosimetrisch bei 20°C und bei einem Schergefälle von 150 s⁻¹, aufweist.

3. Verfahren zur Herstellung der Konzentrate nach Anspruch 1 oder 2, dadurch gekennzeichnet, daß eine wäßrige Dispersion enthaltend ein oder mehrere kathodisch abscheidbare Bindemittel, gegebenenfalls einen oder mehrere Vernetzer für die Bindemittel, gegebenenfalls ein oder mehrere organische Lösemittel, die eine Viskosität von 500 bis 2000 mPa.s, gemessen rotationsviskosimetrisch bei 20°C und einem Schergefälle von 150 s⁻¹ , aufweist,
vermischt wird mit einer Zubereitung, die ein oder mehrere Pigmente und gegebenenfalls Füllstoffe, sowie
gegebenenfalls ein oder mehrere mit Wasser mischbare organische Lösemittel und Wasser enthält und eine Viskosität von 50 bis 10000 mPa.s, gemessen rotationsviskosimetrisch bei 20°C und einem Schergefälle von 150 s⁻¹, aufweist.

4. Verfahren zur Herstellung oder Ergänzung von kathodisch abscheidbaren Elektrotauchlackbädern, dadurch gekennzeichnet, daß man ein Konzentrat gemäß Anspruch 1 oder 2, oder hergestellt gemäß Anspruch 3 mit Wasser oder einem durch kathodische Abscheidung an Festkörper verarmten kathodisch abscheidbaren Elektrotauchlackbad unter Erzielung eines Gehalts an organischen Lösemitteln von unter 4 Gew.-% im Bad vermischt.

5. Verwendung der Konzentrate nach Anspruch 1 oder 2 zur Herstellung oder Ergänzung von kathodisch abscheidbaren Elektrotauchlackbädern.

## Claims

1. A concentrate suitable for producing and supplementing cathodically depositable electro-dip lacquer baths, containing one or more cathodically depositable binder vehicles, optionally one or more crosslinking agents for the binder vehicles, optionally one or more organic solvents, one or more pigments and/or one or more preparations which contain pigments, and optionally containing extenders and water, characterised in that its solids content is 35 to 50 % by weight, at a ratio by weight of pigment and optionally of extender to binder vehicle plus the crosslinking agents which are optionally present of
0.01 : 1 to 0.4 : 1,
its viscosity is 100 to 500 mPa.s as measured in a rotating viscometer at 20°C and at a shear rate of 150 sec⁻¹,
and its solvent content is 0 to less than 20 % by weight with respect to the solids content.

2. A concentrate according to claim 1, characterised in that it is obtainable by mixing an aqueous dispersion of one or more cathodically depositable binder vehicles, optionally one or more crosslinking agents for the binder vehicles, and optionally one or more organic solvents, which has a viscosity of 500 to 2000 mPa.s as measured in a rotating viscometer at 20°C and at a shear rate of 150 sec⁻¹,
with a preparation which contains one or more pigments and optionally extenders, and which also optionally contains one or more organic solvents, which are miscible with water, and water, and which has a viscosity of 50 to 10,000 mPa.s as measured in a rotating viscometer at 20°C and at a shear rate of 150 sec⁻¹.

3. A method of producing concentrates according to claim 1 or 2, characterised in that an aqueous dispersion containing one or more cathodically depositable binder vehicles, optionally one or more crosslinking agents for the binder vehicles, and optionally one or more organic solvents, which has a viscosity of 500 to 2000 mPa.s as measured in a rotating viscometer at 20°C and at a shear rate of 150 sec⁻¹,
is mixed with a preparation which contains one or more pigments and optionally extenders,
and which also optionally contains one or more organic solvents, which are miscible with water, and water, and which has a viscosity of 50 to 10,000 mPa.s as measured in a rotating viscometer at 20°C and at a shear rate of 150 sec⁻¹.

4. A method of producing or supplementing cathodically depositable electro-dip lacquer baths, characterised in that a concentrate according to claim 1 or 2, or which is produced according to claim 3, is mixed with water or with a cathodically depositable electro-dip lacquer bath which is depleted in solids due to cathodic deposition, with the attainment of a content of organic solvents of less than 4 % by weight in the bath.

5. The use of the concentrates according to claim 1 or 2 for producing or supplementing cathodically depositable electro-dip lacquer baths.

## Revendications

1. Concentré pour fabriquer et compléter des bains de laquage au trempé par électrodéposition cathodique, contenant un ou plusieurs liants pouvant se déposer à la cathode, éventuellement un ou plusieurs agents de réticulation pour le liant, éventuellement un ou plusieurs solvants organiques, un ou plusieurs pigments et/ou une ou plusieurs préparations contenant du pigment et éventuellement des charges ainsi que de l'eau,
caractérisé par le fait que sa teneur en matière solide vaut de 35 à 50% en poids pour un rapport entre le poids de pigment et éventuellement de charge et le poids du liant plus éventuellement d'agent de réticulation existant de 0,01:1 à 1 à 0,4:1,
que sa viscosité vaut 100 à 500 mPa.s, mesurée au viscosimètre à rotation à 20°C et pour une pente du cisaillement de 150 s⁻¹,
et sa teneur en solvant vaut de 0 à moins de 20% en poids, rapportée à la teneur en matières solides.

2. Concentré selon la revendication 1, caractérisé par le fait que l'on peut l'obtenir en mélangeant une dispersion aqueuse constituée d'un ou plusieurs liants pouvant se déposer à la cathode, éventuellement d'un ou plusieurs agents de réticulation pour les liants, éventuellement d'un ou plusieurs solvants organiques, d'une viscosité de 500 à 2000 MPa.s, mesurée au viscosimètre à rotation à 20°C pour une pente du cisaillement de 150 s⁻¹,
avec une préparation qui contient un ou plusieurs pigments et éventuellement des charges, ainsi qu'éventuellement un ou plusieurs solvants organiques miscibles à l'eau et de l'eau et présente une viscosité de 50 à 1000 mPa.s, mesurée au viscosimètre à rotation à 20°C et pour une pente du cisaillement de 150 s⁻¹.

3. Procédé de fabrication des concentrés selon la revendication 1 ou 2, caractérisé par le fait que l'on mélange une dispersion aqueuse contenant un ou plusieurs liants pouvant se déposer à la cathode, éventuellement un ou plusieurs agents de réticulation pour les liants, éventuellement un ou plusieurs solvants organiques, qui présente une viscosité de 500 à 2000 mPa.s, mesurée au viscosimètre à rotation à 20°C et pour une pente du cisaillement de 150 s⁻¹,
avec une préparation qui contient
un ou plusieurs pigments et éventuellement des charges,
ainsi que,
éventuellement un ou plusieurs solvants organiques miscibles à l'eau et de l'eau et présente une viscosité de 50 à 10000 mPa.s, au viscosimètre à rotation à 20°C et pour une pente du cisaillement de 150 s⁻¹.

4. Procédé pour fabriquer ou compléter des bains de laquage au trempé par électrodéposition cathodique, caractérisé par le fait que l'on mélange un concentré, conforme à la revendication 1 ou 2, ou fabriqué selon la revendication 3, à de l'eau ou à un bain de laquage au trempé par électrodéposition cathodique, appauvri en matières solides par suite de la déposition cathodique, pour obtenir une teneur en solvant organique inférieure à 4% en poids dans le bain.

5. Emploi des concentrés selon la revendication 1 ou 2, pour fabriquer ou compléter des bains de laquage au trempé par électrodéposition cathodique.
